Europäisches Patentamt

European Patent Office

Office européen des brevets

(19)

(11) **EP 1 377 493 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(21) Anmeldenummer: **02727541.1**

(22) Anmeldetag: **08.04.2002**

(51) Int Cl.⁷: **B62D 5/04**

(86) Internationale Anmeldenummer:
**PCT/EP2002/003884**

(87) Internationale Veröffentlichungsnummer:
**WO 2002/081288 (17.10.2002 Gazette 2002/42)**

(54) **Elektronischer Endanschlag für eine Servolenkung**

Electronic end stop for a power steering unit

Limite de butée électronique pour une direction assistée

(84) Benannte Vertragsstaaten:
**AT BE CH CY DE DK ES FI FR GB GR IE IT LI LU MC NL PT SE TR**

(30) Priorität: **09.04.2001 DE 10117634**

(43) Veröffentlichungstag der Anmeldung:
**07.01.2004 Patentblatt 2004/02**

(73) Patentinhaber: **ThyssenKrupp Presta SteerTec GmbH**
**40476 Düsseldorf (DE)**

(72) Erfinder:
• **VON HAMMEL, Klaus**
**70619 Stuttgart (DE)**
• **NIESSEN, Harwin**
**73230 Kirchheim unter Teck (DE)**

(74) Vertreter: **Gerber, Wolfram et al**
**Lenzing Gerber,**
**Postfach 20 05 09**
**40103 Düsseldorf (DE)**

(56) Entgegenhaltungen:
**EP-A- 1 167 158 WO-A-01/20412**
**DE-A- 19 713 576**

EP 1 377 493 B1

**Beschreibung**

Die vorliegende Erfindung betrifft eine motorgetriebene Servolenkungseinheit mit einem Elektromotor zum Erzeugen einer Hilfslenkkraft in einem Lenksystem, welches eine Lenkhandhabe mit Fahrzeugrädern koppelt, wobei die Servolenkungseinheit die Drehung des Lenkrads durch Steuerung eines dem Elektromotor zuzuführenden elektrischen Stroms auf der Basis einer Lenkinformation unterstützt, umfassend eine Lenkwinkelerfassungseinrichtung.

Eine gattungsgemäße motorgetriebene Servolenkungseinheit ist aus der DE 38 21 789 bekannt. Diese Servolenkungseinheit umfaßt eine Lenkkraft-Schutzeinrichtung zum Erfassen der in dem Lenksystem erzeugten Lenkkraft, sowie eine Überlast-Schutzeinrichtung zum Herabsetzen des dem Motor zugeführten elektrischen Stroms. Anhand der ermittelten Lenkkraft, welche z.B. an dem Torsionsstab des Lenksystems gemessen wird, wird die Unterstützung mittels der Überlast-Schutzeinrichtung dann herabgesetzt, wenn die erfaßte Lenkkraft einen vorbestimmten Wert überschreitet. Die DE 38 21 789 offenbart ferner eine gattungsgemäße Servolenkungseinheit, bei der zusätzlich die Lenkgeschwindigkeit gemessen wird und diese Größe ebenfalls bei der Berechnung bzw. Reduzierung der Unterstützung berücksichtigt wird. Bei dieser Ausführungsform wird die Unterstützung nur dann reduziert, wenn zum einen der Handkraftlevel überschritten wird und zum anderen die Lenkgeschwindigkeit einen bestimmten Wert nicht überschritten hat. Nachteilig bei den aus der DE 38 21 789 bekannten Servolenkungseinheiten ist, daß das Fahrgefühl beim Endanschlag durch die Drehsteifigkeit des Drehstabes des Lenkungssystems bestimmt ist und nicht durch die Steuerung der Servolenkungseinheit beeinflußt bzw. eingeregelt werden kann.

Aufgabe der vorliegenden Erfindung ist es, eine Servolenkungseinheit bereitzustellen, bei der das Fahrgefühl in den Bereichen des linken und rechten Endanschlags vorgebbar bzw. durch eine entsprechende Reduzierung der Unterstützung beeinflußbar ist.

Diese Aufgabe wird erfindungsgemäß jeweils mittels einer motorgetriebenen Servolenkungseinheit mit den Merkmalen der beiden unabhängigen Ansprüche 1 und 2 gelöst. Die Unteransprüche 3 bis 16 enthalten weitere die Servolenkungseinheiten der Ansprüche 1 und 2 weiter ausgestaltende Merkmale.

Die erfindungsgemäßen Servolenkungseinheit gemäß der beiden unabhängigen Ansprüche 1 und 2 zeichnen sich vorteilhaft dadurch aus, daß auf in jedem modernem Lenkungssystem bereits vorhandene Lenkwinkelinformationen zurückgegriffen werden kann. Vorteilhaft kann bereits vor dem Erreichen des jeweiligen Endanschlags die Unterstützung bzw. der zuzuführende Strom, der vorher durch die Motorsteuerung bestimmt worden ist, reduziert werden. Die Größe der Reduzierung ist dabei vorteilhaft vom Lenkwinkel abhängig, so daß die Unterstützung mit zunehmender Annäherung an den jeweiligen Endanschlag immer mehr reduziert werden kann. Die Reduzierung kann z.B. vorteilhaft dadurch erfolgen, daß der von der Motorsteuerung bestimmte Wert für den zuzuführenden Strom mittels eines Proportionalitätsfaktors a multipliziert wird und anschließend der Wert der steuerbaren Stromquelle übergeben wird, welche dann den zuzuführenden Strom einregelt. Die Funktion a = f(Lenkwinkel) kann dabei beliebig gewählt werden. Soll verhindert werden, daß die Unterstützung gänzlich, d.h. auf null, reduziert wird, ist es vorteilhaft, einen unteren Minimalwert für den Proportionalitätsfaktor vorzugeben.

Es ist ebenfalls von Vorteil, wenn die Reduzierung der Unterstützung nur dann aktiv wird, wenn das Fahrzeug eine bestimmte Geschwindigkeit noch nicht überschritten hat. Hierdurch wird verhindert, daß sich eine falsche Bestimmung des Lenkwinkels nur bei kleinen Geschwindigkeiten auswirkt und bei größeren Geschwindigkeiten keine Störung durch eine ungewollte Beeinflussung der Unterstützung erfolgt.

Ebenfalls kann der Bereich, in dem die Unterstützung reduziert werden soll, durch Vorgabe von Grenzwinkeln frei und unabhängig von technischen Gegebenheiten vorgegeben werden.

Damit das Herausdrehen der gelenkten Fahrzeugräder aus einer der beiden Endstellungen in Richtung Mittellage mit der vollen Unterstützung erfolgt, besitzen die erfindungsgemäßen Servolenkungseinheiten eine Funktion, die die Vorzeichen der Handkraft und des Lenkwinkels abfragen. Je nach Vorzeichenkonvention müssen dabei für jede Endstellung zwei Fälle unterschieden werden. Weisen beide Größen das gleiche Vorzeichen auf, was bedeutet, daß die Lenkkraft derart gerichtet ist, daß versucht wird, die Räder in Richtung der Endstellung zu bewegen, so wird die Unterstützung reduziert, sofern der vorbeschriebene Grenzwinkel überschritten ist. Beim Herauslenken der Räder aus der Endstellung in Richtung der Mittenstellung sind dagegen die Vorzeichen der Größen unterschiedlich. In diesem Fall soll die maximale bzw. bestmögliche Unterstützung dem Fahrer zur Verfügung gestellt werden. Der Proportionalitätsfaktor wird daher in diesem Fall zu eins gesetzt, so daß der von der Motorsteuerung berechnete Wert für den zuzuführenden Strom an die regelbare Stromquelle weitergeleitet wird.

Es ist selbstverständlich, daß die Erfindung nicht darauf beschränkt ist, daß mittels des Proportionalitätsfaktors lediglich der Wert des zuzuführenden Stroms multipliziert und dann der Motorsteurerung bzw. der steuerbaren Stromquelle übergeben wird. Es ist auch möglich, daß das vom Lenkungssystem berechnete Unterstützungsmoment mit dem Proportionalitätsfaktor multipliziert und dann das Produkt der Motorsteuerung bzw. einer sonstigen Steuerungsoder Regelungseinheit übergeben wird.

Nachfolgend wird das Funktionsprinzip der Erfindung anhand von Zeichnungen näher erläutert.

Es zeigen:

Fig. 1	Winkelbereiche, in denen die Unterstützung reduziert wird, sofern die Fahrzeuggeschwindigkeit einen bestimmten Wert nicht überschritten hat;

Fig. 2	eine mögliche Funktion a = f(Lenkwinkel);

Fig. 3	ein Flußdiagramm für ein mögliches Verfahren zur Berechnung eines Proportionalitätsfaktors;

Fig. 4	ein Blockdiagramm für eine mögliche Anordnung der lenkwinkelabhängigen Reduzierungeinheit bzw. "Endlock Protection" Einheit im Lenkungssystem.

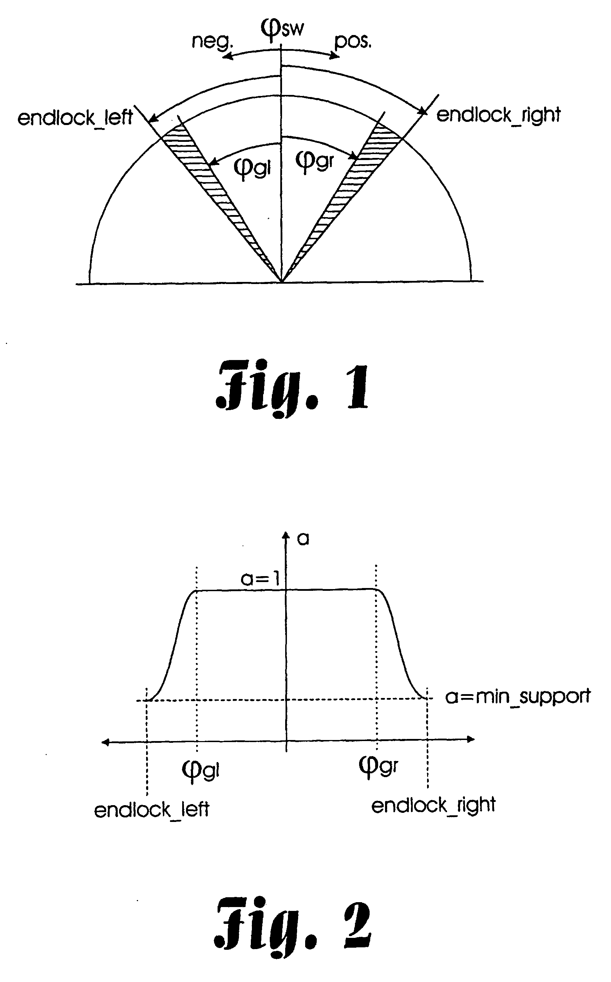

Die Figur 1 dient der Erläuterung der für die erfindungsgemäße Servolenkungseinheit relevanten Größen. Dabei bezeichnet "endlock_right" den Winkel, bei dem sich das Lenkungssystem im rechten mechanischen Endanschlag befindet. "endlock_left" bezeichnet den Winkel, bei dem sich das Lenkungssystem im linken mechanischen Endanschlag befindet. Der Winkel $\varphi_{gr}$ ist der rechte Grenzwinkel und $\varphi_{gl}$ ist der linke Grenzwinkel. Sind die gelenkten Räder derart eingeschlagen, daß sich der Lenkwinkel in dem schraffierten Bereich befindet, so wird die Unterstützung bzw. der zuzuführende Strom reduziert. Sofern optional die Fahrzeuggeschwindigkeit $v_{vehicle}$ berücksichtigt wird, wird die Unterstützung bzw. der zuzuführende Strom nur dann reduziert, wenn das Fahrzeug eine bestimmte vorgegebene Geschwindigkeit nicht überschritten hat. Entsprechend der gewählten Vorzeichenkonvention ist der Lenkwinkel $\varphi_{sw}$ positiv, wenn das Lenkrad bzw. die Räder nach rechts verstellt sind. Der Lenkwinkel $\varphi_{sw}$ ist dagegen negativ, wenn das Lenkrad bzw. die Räder nach links verdreht bzw. verstellt sind. Befindet sich das Lenkrad und/oder die gelenkten Fahrzeugräder in der Mittenstellung, ist der Lenkwinkel $\varphi_{sw}$ gleich null.

Die Figur 2 zeigt einen möglichen funktionalen Zusammenhang zwischen dem Faktor a und dem Lenkwinkel $\varphi_{sw}$. Der Faktor a ist gleich eins, wenn der Lenkwinkel $\varphi_{sw}$ keinen der beiden Grenzwinkel $\varphi_{gr}$ und $\varphi_{gl}$ überschritten hat. Sobald dagegen der Lenkwinkel $\varphi_{sw}$ einen der beiden Grenzwinkel $\varphi_{gr}$ und $\varphi_{gl}$ überschritten hat, wird der Faktor a kleiner. Wenn benötigt, kann eine zusätzliche Abfrage und Begrenzung für den Faktor a erfolgen. So kann z.B. der Wert auf einen unteren Grenzwert min_support, den er bei dem Lenkwinkel $\varphi_{sw}$ gleich endlock_richt bzw. endlock_left oder vorher erreicht begrenzt werden. Der in Figur 2 gezeigte funktionale Zusammenhang ist nur beispielhaft. Es ist selbstverständlich möglich, je nach Bedarf den Kurvenverlauf anders vorzugeben. Es ist z.B. ein linearer, quadratischer, exponentieller oder logarithmischer Abfall des Faktors a in den Winkelbereichen endlock_left < $\varphi_{sw}$ <

$\varphi_{gl}$ bzw. $\varphi_{gr}$ < $\varphi_{sw}$ < endlock_rigth denkbar. So können für min_support ebenfalls beliebige geeignete Werte vorgegeben werden.

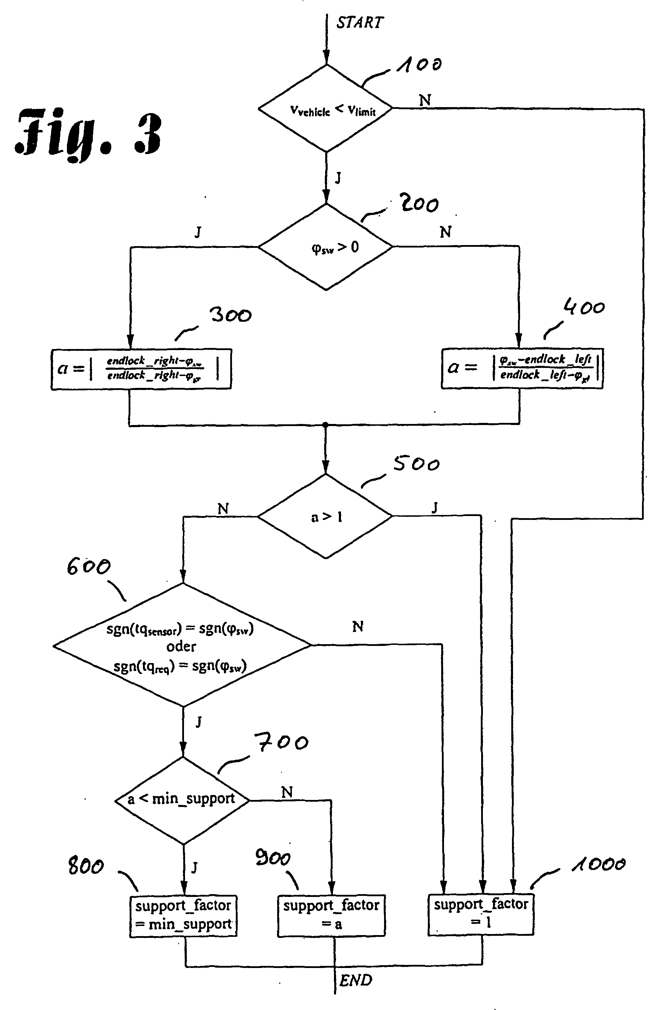

Die Figur 3 zeigt ein Flußdiagramm für ein mögliches Verfahren zur Realisierung der erfindungsgemäßen Servolenkungseinheiten. In einem ersten Schritt 100 wird überprüft, ob die Fahrzeuggeschwindigkeit einen bestimmten Wert $v_{limit}$ überschritten hat. Sofern das Fahrzeug mit einer Geschwindigkeit größer als $v_{limit}$ fährt, wird der Proportionalitätsfaktor support_factor im Schritt 1000 gleich eins gesetzt, womit das Berechnungsverfahren an seinem Ende angelangt ist, und danach von neuem gestartet wird. Sofern das Fahrzeug $v_{limit}$ nicht überschritten hat, wird zum Schritt 200 verzweigt, wo das Vorzeichen des Lenkwinkels $\varphi_{sw}$ geprüft wird. Sofern $\varphi_{sw}$ kleiner null, d.h. nach links gelenkt ist, wird der Faktor a mittels des Schritts 400 berechnet. Dabei wird die Winkeldifferenz zwischen dem Endanschlagwinkel endlock_left und dem Lenkwinkel $\varphi_{sw}$ berechnet. Diese Differenz wird durch die Winkeldifferenz von endlock_left minus $\varphi_{gl}$ geteilt. Da die Winkeldifferenz endlock_left minus dem Grenzwinkel $\varphi_{gl}$ eine Konstante ist, die einen Winkelbereich angibt, kann auch durch diesen zuvor berechneten und abgespeicherten Winkelbereichswert geteilt werden. Sofern die zuletzt genannte Winkeldifferenz positiv ist, kann auf die Absolutwertbildung von a verzichtet werden. Entsprechend wird der Faktor a im Schritt 300 berechnet, sofern der Lenkwinkel $\varphi_{sw}$ größer als Null ist. Der Faktor a ist eine Funktion von dem Lenkwinkel $\varphi_{sw}$. Je nach vorgegebenem Grenzwinkel $\varphi_{gl}$ bzw. $\varphi_{gr}$ wird der Wert des Faktors a bei kleiner bzw. größer werdendem Lenkwinkel $\varphi_{sw}$ einen bestimmten vorgebbaren Wert unterschreiten. Im Schritt 500 wird überprüft, ob der zuvor in den Schritten 300 und 400 berechnete Wert größer als eins ist. Sofern bei dem in Figur 3 gezeigten Verfahren der Wert von a größer als eins ist, wird der Proportionalitätsfaktor support_factor gleich eins gesetzt und das Verfahren beendet bzw. der Wert des Proportionalitätsfaktors support_factor für die Weiterberechnung der Unterstützung weitergegeben. Sofern der Wert des Faktors a kleiner gleich eins ist, wird eine Vorzeichenüberprüfung mit Schritt 600 vorgenommen. Dabei können alternativ entweder die Richtung bzw. das Vorzeichen des Handmoments $tq_{sensor}$ mit dem Vorzeichen des Lenkwinkels verglichen werden. Oder es wird die Richtung bzw. das Vorzeichen der von dem vom Lenkungssystem bzw. Controller bereits ermittelten Unterstützung bzw. des Stellsignals $tq_{req}$ mit dem Vorzeichen des Lenkwinkels verglichen. Sofern die Vorzeichen bzw. Richtungen nicht übereinstimmen, wird zum Schritt 1000 verzweigt und der Proportionalitätsfaktor support_factor gleich eins gesetzt. Bei ungleichem Vorzeichen der Werte liegt der Fall vor, daß versucht wird, die Räder bzw. das Lenkrad in Richtung Mittenstellung zu bewegen. Sofern die Vorzeichen identisch sind, wird versucht, die Räder bzw. das Lenkrad in Richtung Endstellung zu bewegen. In diesem Fall wird im Schritt 700 geprüft, ob der Wert des Faktors a kleiner als der minimal erlaubte Unterstützungsfaktor min_support ist. Sofern a < min_support, wird nach Schritt 800 verzweigt und der Proportionalitätsfaktor support_factor gleich min_support gesetzt. Sofern a >= min_support, wird nach Schritt 900 verzweigt und der Proportionalitätsfaktor support_factor gleich a gesetzt. Nach Beendigung der Schritte 800 und 900 ist das Berechnungsverfahren abgeschlossen, und die Berechnung eines neuen Proportionalitätsfaktors support_factor kann begonnen werden.

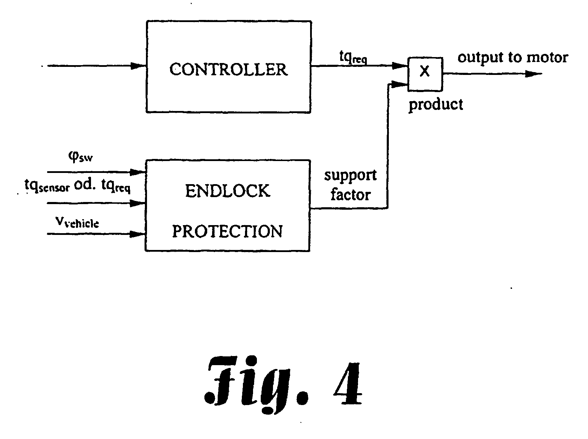

Die Figur 4 zeigt ein Blockdiagramm für eine mögliche Anordnung der lenkwinkelabhängigen Reduzierungeinheit bzw. "Endlock Protection" Einheit im Lenkungssystem. Der Controller erzeugt ein Stellsignal $tq_{req}$, das mit dem Proportionalitätsfaktor support_factor multipliziert wird. Das Produkt der Multiplikation wird anschließend der Motorsteuerung des Elektromotors, welcher die Unterstützung generiert, zugeführt. Der Proportionalitätsfaktor support_factor wird mittels der "Endlock-Protection"-Einheit berechnet, die z.B. das in Figur 3 beschriebene Verfahren verwendet. Einzig zwingend notwendige Eingangsgröße für die "Endlock-Protection"-Einheit ist der Lenkwinkel $\varphi_{sw}$. Optional kann die Fahrzeuggeschwindigkeit $v_{vehicle}$ und das ermittelte Handmoment bzw. die Größe des Stellsignals $tq_{req}$ mit zur Bestimmung des Proportionalitätsfaktors support_factor herangezogen werden.

## Patentansprüche

1. Motorgetriebene Servolenkungseinheit mit einem Elektromotor zum Erzeugen einer Hilfslenkkraft in einem Lenksystem, welches eine Lenkhandhabe mit Fahrzeugrädern koppelt, wobei die Servolenkungseinheit die Drehung des Lenkrads durch Steuerung eines dem Elektromotor zuzuführenden elektrischen Stroms auf der Basis einer Lenkinformation unterstützt, umfassend eine Lenkwinkelerfassungseinrichtung, wobei die Servolenkungseinheit in Abhängigkeit des erfaßten Lenkwinkels die Unterstützung einregelt, **dadurch gekennzeichnet, daß** nach dem Überschreiten bzw. nach dem Erreichen eines vorbestimmten oder vorgebbaren Winkels vor Erreichen der jeweiligen Endstellung die Unterstützung bzw. der Strom reduziert wird und daß die Reduzierung der Unterstützung bzw. des Stroms aufgehoben wird, sobald die Vorzeichen von Lenkmoment und Lenkwinkel nicht mehr übereinstimmen.

2. Motorgetriebene Servolenkungseinheit nach Anspruch 1, **dadurch gekennzeichnet, daß** die Servolenkungseinheit eine Überlast-Schutzeinrichtung zum Herabsetzen des dem Elektromotor zugeführten elektrischen Stroms hat.

3. Motorgetriebene Servolenkungseinheit nach Anspruch 1 oder 2, **dadurch gekennzeichnet, daß** in den Winkelbereichen vor Erreichen der jeweiligen Endstellungen der gelenkten Fahrzeugräder die Unterstützung bzw. der elektrische Strom reduziert wird.

4. Motorgetriebene Servolenkungseinheit nach einem der vorhergehenden Ansprüche, **dadurch gekennzeichnet, daß** die Unterstützung derart reduziert wird, daß die gelenkten Räder bzw. die Lenkhandhabe oder das Lenkgestänge maximal nur mit einer vorgegebenen maximalen Geschwindigkeit und/ oder Kraft die Endstellungen erreichen können.

5. Motorgetriebene Servolenkungseinheit nach einem der vorhergehenden Ansprüche, **dadurch gekennzeichnet, daß** die Unterstützung nur dann reduziert wird, wenn das Fahrzeug eine bestimmte Geschwindigkeit nicht überschritten hat.

6. Motorgetriebene Servolenkungseinheit nach einem der vorhergehenden Ansprüche, **dadurch gekennzeichnet, daß** die Unterstützung nach dem Erreichen eines bestimmten vorgebbaren oder vorgegebenen Winkels $\varphi_{gr}$ bzw. $\varphi_{gl}$ kontinuierlich bis zum Erreichen der jeweiligen Endstellung mehr und mehr reduziert wird.

7. Motorgetriebene Servolenkungseinheit nach Anspruch 6, **dadurch gekennzeichnet, daß** die Reduzierung sich linear, exponentiell, quadratisch oder entsprechend einer winkelabhängigen Funktion vergrößert.

8. Motorgetriebene Servolenkungseinheit nach einem der vorhergehenden Ansprüche, **dadurch gekennzeichnet, daß** die von dem Lenkungssystem berechnete Unterstützung bzw. der Wert des zuzuführenden elektrischen Stroms mit einem Proportionalitätsfaktor "suppot_factor" multipliziert wird, und anhand der daraus resultierenden Unterstützung der Elektromotor angesteuert wird bzw. der daraus resultierende elektrische Strom dem Elektromotor zugeführt wird.

9. Verfahren zur Berechnung des Proportionalitätsfaktors "support_factor" für eine motorgetriebene Servolenkungseinheit nach Anspruch 8, **dadurch gekennzeichnet, daß**

   - in einem ersten Verfahrensschritt geprüft wird, ob die tatsächliche Fahrzeuggeschwindigkeit $v_{vehicle}$ eine bestimmte Geschwindigkeit $v_{limit}$ überschritten hat,

   - sofern $v_{vehicle}$ >= $v_{limit}$, wird der Proportionalitätsfaktor "support_factor" gleich 1 (eins) gesetzt und das Verfahren beendet,

- sofern $v_{vehicle} < v_{limit}$ , wird mit der Berechnung des Proportionalitätsfaktor "support_factor" fortgesetzt.

10. Verfahren nach Anspruch 9, **dadurch gekennzeichnet, daß** bei Vorliegen der Bedingung $v_{vehicle} \geq v_{limit}$ in einem anschließenden Verfahrensschritt geprüft wird, ob der Lenkwinkel positiv oder negativ ist, wobei dann anschließend für die jeweilgen Winkelbereiche ein Faktor a berechnet wird, wobei

$$a = \left| \frac{\varphi_{sw}\text{-}endlock\_left}{endlock\_left\text{-}\varphi_{gl}} \right|$$

wenn das Lenkrad aus der Mittenposition nach links verdreht ist, und wobei

$$a = \left| \frac{endlock\_right\text{-}\varphi_{sw}}{endlock\_right\text{-}\varphi_{gr}} \right|$$

wenn das Lenkrad aus der Mittenposition nach rechts verdreht ist, wobei endlock_right der rechte Anschlagwinkel, endlock_left der linke Anschlagwinkel und $\varphi_{sw}$ der aktuelle Lenkradwinkel ist.

11. Verfahren nach Anspruch 10, **dadurch gekennzeichnet, daß** für Werte des Faktors a, welche größer als der Wert eins sind, der Porportionalitätsfaktor support_factor gleich eins gesetzt wird und die Berechnung beendet wird.

12. Verfahren nach Anspruch 10 oder 11, **dadurch gekennzeichnet, daß** der Porportionalitätsfaktor support_factor gleich dem Faktor a gesetzt wird, sofern der Wert des Faktors a größer gleich einem vorgegebenen Minimalwert min_support und kleiner gleich eins ist, und daß der Porportionalitätsfaktor support_factor gleich dem Minimalwert min_support gesetzt wird, sofern der Faktor a kleiner als der Minimalwert min_support ist.

13. Verfahren nach einem der Ansprüche 9 bis 12, **dadurch gekennzeichnet, daß** der Proportionalitätsfaktor support_factor gleich eins gesetzt wird, sobald die Vorzeichen von Lenkmoment und Lenkwinkel nicht mehr übereinstimmen.

**Claims**

1. Motor-driven power steering unit with an electric motor for producing an auxiliary steering force in a steering system, that couples a steering handle to the wheels of a vehicle, whereby the power steering unit assists the rotation of the steering wheel by controlling an electric current fed to the electric motor based on steering information, comprising a steering angle detection device, whereby the power steering unit regulates the support depending on the steering angle detected, **characterised in that** that the support or the current is reduced after exceeding or after reaching a preset or pre-definable angle before reaching the respective end position and that the reduction of the support or the current is increased as soon as the signs of steering force and steering angle no longer coincide.

2. Motor-driven power steering unit according to Claim 1, **characterised in that** the power steering unit has an overload protection device to reduce the electric current fed to the electric motor.

3. Motor-driven power steering unit according to Claim 1 or 2, **characterised in that** the support or the electric current is reduced in the angle ranges before the respective end positions of the steered vehicle wheels are reached.

4. Motor-driven power steering unit according to any one of the above claims, **characterised in that** the support is reduced in such a manner that the steered wheels or the steering handle or the steering rod can at maximum only reach the end positions with a pre-set maximum speed and/or force.

5. Motor-driven power steering unit according to any one of the above claims, **characterised in that** the support is only reduced if the vehicle has not exceeded a certain speed.

6. Motor-driven power steering unit according to any one of the above claims, **characterised in that** the support is continually reduced more and more after a certain pre-definable or pre-set angle $\varphi_{gr}$ or $\varphi_{gl}$ is reached until the respective end position is reached.

7. Motor-driven power steering unit according to Claim 6, **characterised in that** the reduction increases linearly, exponentially, quadratically or corresponding to an angle dependent-function.

8. Motor-driven power steering unit according to any one of the above claims, **characterised in that** the support computed by the steering system or the value of the electric current to be supplied is multiplied with a proportionality factor "support_factor", and the electric motor is controlled based on the support resulting from this or the electric current resulting from this is fed to the electric motor.

9. Method to compute the proportionality factor "support_factor" for a motor-driven power steering unit according to Claim 8, **characterised in that**

- it is checked in a first process step whether the actual vehicle speed $v_{vehicle}$ has exceeded a certain speed $v_{limit}$,
- if $v_{vehicle}>=v_{limit}$, the proportionality factor "support_factor" is set to equal 1 (one) and the process ends,
- if $v_{vehicle}>=v_{limit}$ the process continues with the computation of the proportionality factor "support_factor".

10. Method according to Claim 9, **characterised in that** if $v_{vehicle}=v_{limit}$ is present, it is checked in a subsequent process step whether the steering angle is positive or negative, whereby a factor a is then computed subsequently for the respective angle ranges whereby

$$a = \left| \frac{\varphi_{sw}\text{-}endlock\_left}{endlock\_left\text{-}\varphi_{gl}} \right|$$

if the steering wheel is turned from the central position to the left, and whereby

$$a = \left| \frac{endlock\_right\text{-}\varphi_{sw}}{endlock\_right\text{-}\varphi_{gr}} \right|$$

if the steering wheel is turned from the central position to the right, whereby endlock_right is the right stop angle, endlock_left is the left stop angle and $\varphi_{sw}$ is the actual steering wheel angle.

11. Method according to Claim 10, **characterised in that** for values of the factor a, which are greater than the value one, the proportionality factor support_factor is set equal to one and the computation is ended.

12. Method according to Claim 10 or 11, **characterised in that** the proportionality factor support_factor is set equal to the factor a, if the value of the factor a is greater than or equal to a pre-set minimum value min_support and less than or equal to one and that the proportionality factor support_factor is set equal to the minimum value min_support, if the factor a is less than the minimum value min_support.

13. Method according to any one of Claims 9 to 12, **characterised in that** the proportionality factor support_factor is set equal to one, as soon as the signs of steering force and steering angle no longer coincide.

**Revendications**

1. Unité de direction assistée entraînée par un moteur et comportant un moteur électrique servant à produire une force de braquage auxiliaire dans un système de direction, qui accouple une manette de direction à des roues d'un véhicule, dans lequel l'unité de direction assistée assiste la rotation du volant de direction par commande d'un courant électrique, qui doit être envoyé au moteur électrique, sur la base d'une information de direction, comprenant un dispositif de détection de l'angle de braquage, l'unité de direction assistée réglant l'assistance fournie en fonction de l'angle de braquage détecté, **caractérisée en ce qu'**une fois qu'un angle prédéterminé ou pouvant être prédéterminé est dépassé ou atteint et avant que la position d'extrémité respective soit atteinte, l'assistance ou le courant est réduit et que la réduction de l'assistance ou du courant est supprimée dès que le signe du couple de braquage et de l'angle de braquage ne coïncident plus.

2. Unité de direction assistée entraînée par un moteur selon la revendication 1, **caractérisée en ce que** l'unité de direction assistée comporte un dispositif de protection contre une surcharge, afin de réduire le courant électrique envoyé au moteur électrique.

3. Unité de direction assistée entraînée par un moteur selon la revendication 1 ou 2, **caractérisée en ce que** l'assistance ou le courant électrique est réduit dans les plages angulaires avant que soient atteintes les positions finales respectives des roues orientables du véhicule.

4. Unité de direction assistée entraînée par un moteur selon l'une des revendications précédentes, **caractérisée en ce que** l'assistance est réduite de telle sorte que les roues orientables ou la manette de direction ou la tringlerie de direction peuvent atteindre les positions d'extrémité au maximum uniquement avec une vitesse et/ou une force maximale prédéterminée.

5. Unité de direction assistée entraînée par un moteur selon l'une des revendications précédentes, **caractérisée en ce que** l'assistance est réduite uniquement lorsque le véhicule n'a pas dépassé une vitesse déterminée.

6. Unité de direction assistée entraînée par un moteur selon l'une des revendications précédentes, **caractérisée en ce que** l'assistance est de plus en plus réduite une fois qu'un angle déterminé, qui peut être fixé à l'avance ou est fixé à l'avance $\phi_{gr}$ ou $\phi_{gl}$ est atteint et ce d'une manière continue jusqu'à ce que la position d'extrémité respective soit atteinte.

**7.** Unité de direction assistée entraînée par un moteur selon la revendication 6, **caractérisée en ce que** la réduction augmente de façon linéaire, exponentielle, quadratique ou conformément à une fonction dépendant de l'angle.

**8.** Unité de direction assistée entraînée par un moteur selon l'une des revendications précédentes, **caractérisée en ce que** l'assistance, calculée par le système de direction, ou la valeur du courant électrique devant être appliqué, est multipliée par un facteur de proportionnalité "support_factor", et est commandée sur la base de l'assistance, qui en résulte, fournie par le moteur électrique, ou le courant électrique, qui en résulte, est envoyé au moteur électrique.

**9.** Procédé pour calculer le facteur de proportionnalité "support_factor" pour une unité de direction assistée entraînée par un moteur selon la revendication 8, **caractérisé en ce que**

- dans une première étape du procédé, on vérifie si la vitesse effective du véhicule $v_{véhicule}$ a dépassé une vitesse déterminée $v_{limite}$,
- dans la mesure où $v_{véhicule} >= v_{limite}$, le facteur de proportionnalité "support_factor" est positionné égal à 1 (un) et le procédé s'achève,
- dans la mesure où l'on a $v_{véhicule} < v_{limite}$, le procédé se poursuit avec le calcul du facteur de proportionnalité "support_factor".

**10.** Procédé selon la revendication 9, **caractérisé en ce que** dans le cas de la présence de la condition $v_{véhicule} >= v_{limite}$ lors d'une étape suivante du procédé, on vérifie si l'angle de braquage est positif ou négatif, auquel cas on calcule ensuite pour chaque plage angulaire respective un facteur a, auquel cas on a

$$a = \left| \frac{\varphi_{sw}\text{-endlock\_left}}{\text{endlock\_left-}\varphi_{gl}} \right|$$

lorsqu'on fait tourner le volant de direction depuis la position médiane vers la gauche, et auquel cas on a

$$a = \left| \frac{\text{endlock\_right-}\varphi_{sw}}{\text{endlock\_right-}\varphi_{gr}} \right|$$

lorsqu'on fait tourner le volant de direction à partir de la position centrale vers la droite, endlock-right désignant l'angle de butée de droite, endlock_left le couple de braquage et $\varphi_{AW}$ l'angle de braquage ne coïncident plus.

**11.** Procédé selon la revendication 10, **caractérisé en ce que** pour des valeurs du facteur a, qui sont supérieures à la valeur un, le facteur de proportionnalité support_factor est réglé égal à un et le calcul est terminé.

**12.** Procédé selon la revendication 10 ou 11, **caractérisé en ce que** le facteur de proportionnalité support_factor est réglé égal au facteur a dans la mesure où la valeur du facteur a est supérieure ou égale à une valeur minimale prédéterminée min_support et inférieure ou égale à un, et que le facteur de proportionnalité support_factor est réglé à la valeur minimale min_support dans la mesure où le facteur a est inférieur à la valeur minimale min_support.

**13.** Procédé selon l'une des revendications 9 à 12, **caractérisé en ce que** le facteur de proportionnalité support_factor est réglé égal à un dès que les signes du couple de braquage et de l'angle de braquage en coïncident plus.

## Fig. 1

## Fig. 2

# Fig. 3

START

100
$v_{vehicle} < v_{limit}$  — N

J

200
$\varphi_{sw} > 0$

J — N

300
$$a = \left| \frac{endlock\_right - \varphi_{sw}}{endlock\_right - \varphi_{sp}} \right|$$

400
$$a = \left| \frac{\varphi_{sw} - endlock\_left}{endlock\_left - \varphi_{sp}} \right|$$

500
$a > 1$

N — J

600
$sgn(tq_{sensor}) = sgn(\varphi_{sw})$
oder
$sgn(tq_{req}) = sgn(\varphi_{sw})$

N

J

700
$a < min\_support$

N

800
support_factor
= min_support

900
support_factor
= a

1000
support_factor
= 1

J

END

$$\mathfrak{Fig.}\ 4$$